# DEMANDE DE BREVET EUROPEEN

(11) **EP 1 069 632 A1**
(43) Date de publication de la demande: **17.01.2001**
(21) Numéro de dépôt: 00440211.1
(22) Date de dépôt: 10.07.2000
(51) Int. Cl.: H01M 2/10, B60R 16/04

(54) **Dispositif de fixation d'une batterie d'accumulateurs**

(30) Priorité: 15.07.1999 FR 9909311
(71) Demandeur: MGI COUTIER (S.A.), F-01410 Champfromier (FR)
(72) Inventeur: Mathieu, Jean-Jacques, 68720 Flaxlanden (FR)
(74) Mandataire: Nithardt, Roland

(57) **Abrégé**

Dispositif (1) de fixation d'une batterie d'accumulateurs, notamment pour un véhicule automobile comprennant un bac support (2), un levier de verrouillage/déverrouillage (8) et un clip de verrouillage (9) solidaire dudit levier (8), l'ensemble étant réalisé d'une seule pièce dans une matière thermoplastique. Le levier (8) est relié par une zone charnière souple (A) à l'assise (3) du bac support (2) et son extrémité libre arrive à fleur du bord supérieur de la batterie ou le dépasse. Ainsi, pour verrouiller ou déverrouiller la batterie, il suffit d'appuyer sur le levier (8) vers l'extérieur de manière à dégager le clip de verrouillage (9) qui en position de verrouillage est en appui sur le talon de la batterie. Le dispositif comprend également différentes butées (14 à 17) agencées pour supprimer les déplacements verticaux, longitudinaux et transversaux de la batterie.

## Description

La présente invention concerne un dispositif de fixation d'une batterie d'accumulateurs, notamment pour un véhicule automobile, comprenant un bac support de batterie présentant une assise plane et sur au moins deux bords opposés des rebords longitudinaux.

Un tel dispositif est notamment décrit dans la publication EP-A-429 746. Ce dispositif est réalisé en matières plastiques et comporte deux rebords longitudinaux en forme de pli et se déformant pour verrouiller automatiquement les rebords correspondants d'une batterie lors de sa mise en place sur le bac support. Un tel dispositif présente l'inconvénient de ne pas posséder de dispositif de déverrouillage. Cela signifie que lorsque l'on veut retirer la batterie de son support, il est nécessaire d'introduire un outil. Or, l'espace disponible autour de la batterie est en général très limité car le nombre de composants disposés à proximité est important. L'opération de démontage est alors longue et laborieuse. De plus, lors du montage de la batterie, il n'est pas possible de vérifier si les rebords longitudinaux se sont bien remis en place et verrouillent correctement la batterie. On court alors le risque que la batterie se dégage accidentellement de son support.
Pour ces raisons, les dispositifs de ce genre sont inadaptés aux exigences des constructeurs automobiles qui cherchent à sécuriser et à optimiser les temps de montage des composants et à faciliter les opérations de maintenance.

Pour tenter de résoudre ce problème, il a été développé un bac support décrit dans la demande internationale de brevet WO 99/36974 et comportant une petite poignée articulée présentant un clip de verrouillage faisant saillie de manière à se clipper sur un rebord prévu spécifiquement sur une face de la batterie. La poignée se termine sensiblement à la même hauteur que le bac support. De ce fait, le démontage de la batterie de son support n'est pas aisé. En effet, pour saisir la poignée, il faut passer la main dans l'espace disponible autour de la batterie qui est très limité en général. De plus, ce bac support ne peut pas être utilisé pour des batteries standard de la construction automobile européenne à cause du rebord spécial rajouté sur la batterie.

La présente invention vise à pallier ces inconvénients en proposant un dispositif de fixation simple, peu coûteux, d'un poids et d'un encombrement réduits, et qui permet un verrouillage rapide et sûr d'une batterie standard sur son support ainsi qu'un déverrouillage facile et accessible, sans qu'il soit nécessaire d'utiliser un outil.

Dans ce but, l'invention concerne un dispositif de fixation du genre indiqué en préambule, caractérisé en ce qu'il comprend le long d'au moins un bord dudit bac au moins un levier de verrouillage/déverrouillage formant une seule pièce avec ledit bac et relié audit bac par une zone charnière souple, ledit levier de verrouillage/déverrouillage s'étendant au moins sur toute la hauteur de la batterie, et un clip de verrouillage solidaire du levier de verrouillage/déverrouillage, ledit clip de verrouillage étant agencé pour être, en position de verrouillage, en appui sur le talon de la batterie afin de bloquer celle-ci en position après sa mise en place dans son bac support.

D'une manière avantageuse, le levier de verrouillage/déverrouillage s'étend perpendiculairement à l'assise du bac support. De préférence, ledit levier de verrouillage/déverrouillage peut comprendre une branche supérieure et une branche inférieure formant sensiblement un L, la branche supérieure s'étendant au moins sur toute la hauteur de la batterie, et l'extrémité de la branche inférieure est reliée à l'assise du bac, cette liaison constituant ladite zone charnière souple. A cet effet, le bac support peut comprendre sur son rebord longitudinal un dégagement autour de la branche supérieure du levier de verrouillage/déverrouillage et sur son assise des rainures pour recevoir la branche inférieure dudit levier de verrouillage/déverrouillage, celui-ci pivotant alors autour de la zone charnière souple.

D'une manière avantageuse, le clip de verrouillage est constitué d'une seule pièce avec le levier de verrouillage/déverrouillage.

De préférence, le clip de verrouillage présente la forme d'un prisme allongé à base triangulaire.

D'autre part, pour renforcer la fixation de la batterie sur son bac support, il est prévu différentes butées, à savoir notamment sur le rebord longitudinal du bac support opposé au levier de verrouillage/déverrouillage au moins une première butée agencée pour supprimer le déplacement vertical de la batterie. Il est prévu également sur le rebord du bac support adjacent au levier au moins une deuxième butée agencée pour supprimer le déplacement vertical de la batterie, ainsi qu'à l'intérieur d'au moins un rebord du bac support au moins une troisième butée agencée pour supprimer le déplacement longitudinal ou transversal de la batterie. Cette troisième butée agencée pour supprimer le déplacement longitudinal de la batterie peut comprendre une languette souple agencée pour s'éclipser lorsque la batterie présente une longueur supérieure à la distance entre un rebord du bac support et ladite languette.

On peut prévoir également sur l'assise du bac support au moins une butée rétractable agencée pour s'éclipser lorsque la batterie occupe toute la surface du bac support et pour supprimer le déplacement longitudinal ou transversal de la batterie lorsque cette dernière n'occupe que partiellement le bac support.

D'une manière avantageuse, la surface inférieure du bac support comporte des nervures de rigidification ou un réseau d'emboutis.

Enfin, le dispositif de fixation peut comprendre sur l'assise du bac support au moins une nervure proéminente transversale ou longitudinale et agencée pour s'engager à l'intérieur du talon transversal ou longitudinal respectivement.

La présente invention et ses avantages apparaîtront mieux dans la description suivante d'exemples de réalisation, en référence aux dessins annexés, dans lesquels:
- la figure 1 représente une vue en perspective d'un premier exemple du dispositif selon l'invention,
- la figure 2 est une vue en perspective de dessous dudit dispositif,
- la figure 2a représente un détail d'une variante du dessous du dispositif selon l'invention,
- la figure 3 est une vue en coupe montrant deux étapes du montage de la batterie sur son support,
- la figure 4 est une vue en perspective de dessous d'une variante de réalisation du dispositif selon l'invention,
- les figures 5a et 5b sont des vues en perspective de deux autres exemple de réalisation,
- les figures 6 et 7 représentent une vue de détail en coupe partielle du talon de la batterie montée sur son bac support selon une variante de l'invention, et
- les figures 8 et 9 sont des vues de dessus des figures 6 et 7 respectivement.

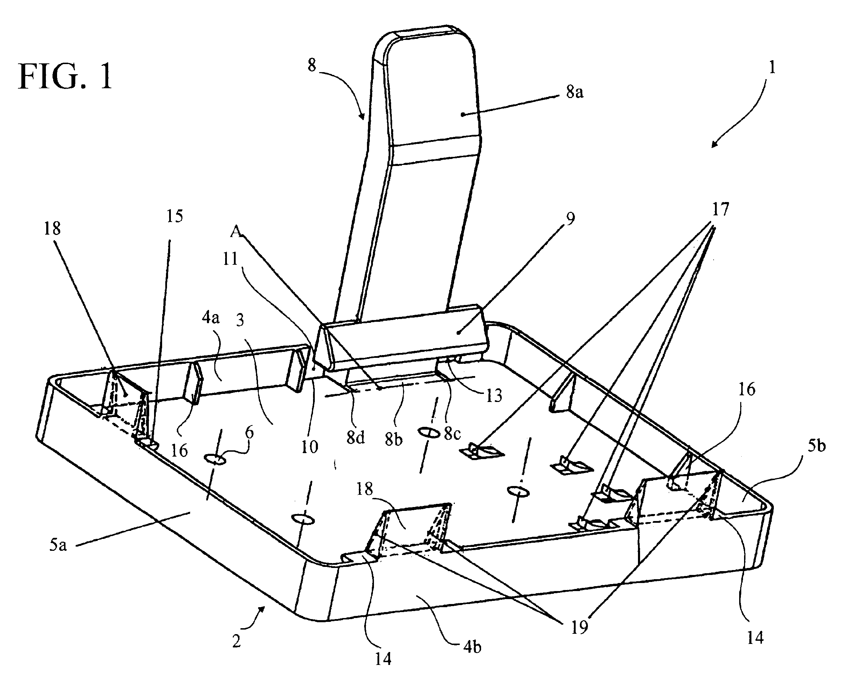

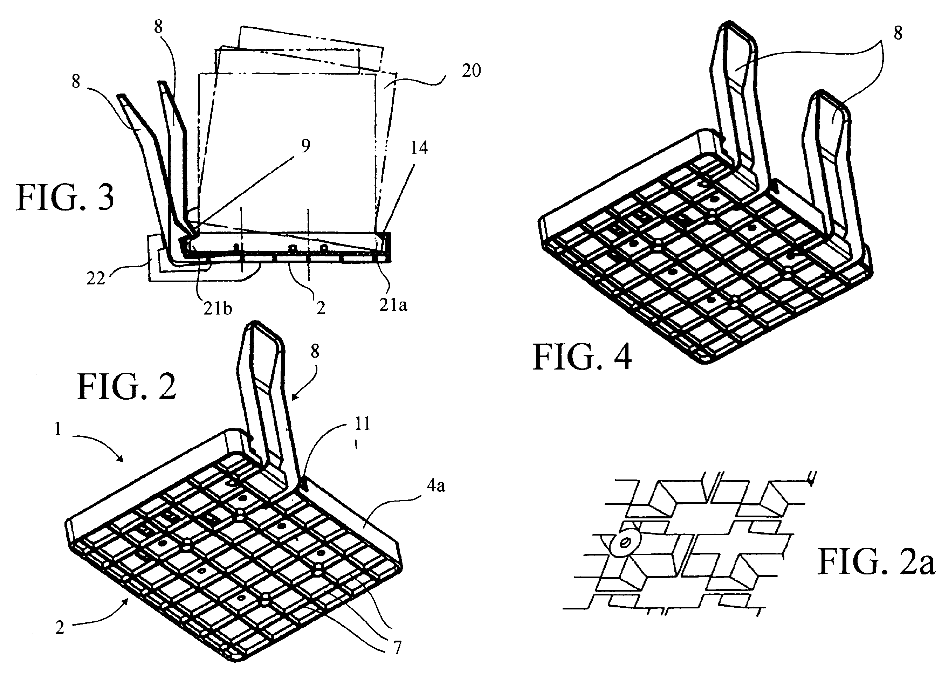

En référence aux figures 1 et 2, le dispositif 1 de fixation d'une batterie d'accumulateurs, notamment pour un véhicule automobile comprend un bac support 2 de forme rectangulaire et présentant une assise plane 3, deux rebords longitudinaux 4a, 4b et deux rebords transversaux 5a, 5b. Le bac support 2 est réalisé en matière thermoplastique, telle que du polypropylène chargé en fibres de verre à 30% ou toute autre matière appropriée. Sur l'assise 3 du bac 2 sont prévus quatre trous 6 pour recevoir des vis (non représentées) pour la fixation du bac support 2 sur la caisse du véhicule ou sur un support spécifique.

Sur la face inférieure du bac support 2 sont prévues des nervures 7 permettant la rigidification de l'assise 3 du bac 2 tout en réduisant la quantité de matière donc le poids et le prix de revient. Comme le montre la figure 2a, il est également possible de prévoir, à la place des nervures 7, un réseau d'emboutis.

Selon l'invention, il est prévu un levier de verrouillage/déverrouillage 8 formant une seule pièce avec le bac support 2, et un clip de verrouillage 9 solidaire dudit levier 8. Le levier 8 présente sensiblement la forme d'un L et comprend à cet effet une branche supérieure 8a de forme rectangulaire et s'étendant perpendiculairement au bac support 2 ainsi qu'une branche inférieure 8b située dans le même plan que l'assise 3 du bac support 2. Comme le montre la figure 3, la branche supérieure 8a présente une longueur choisie de sorte que son extrémité libre arrive sensiblement à fleur du bord supérieur de la batterie une fois cette dernière montée sur son bac support. Dans une autre variante non représentée, la branche supérieure 8a présente une longueur supérieure à la hauteur de la batterie 20. Le choix de la longueur de la branche supérieure 8a, soit au niveau du bord supérieur de la batterie 20, soit le dépassant, et fonction de l'environnement de la batterie. Les deux branches supérieure 8a et inférieure 8b sont reliées de manière rigide et l'extrémité de la branche inférieure 8b est reliée à l'assise 3 du bac support 2, cette dernière liaison constituant une zone charnière souple A au niveau du fond des rainures 8c et 8d prévues de part et d'autre de la branche inférieure 8b.

Le levier de verrouillage/déverrouillage 8 est prévu dans l'alignement du rebord longitudinal 4a du bac support 2, séparé par les rainures 8c et 8c et un dégagement inférieur 11. Ce dégagement 11 a des dimensions suffisantes de manière à ne pas être au contact de la branche supérieure 8a. Ainsi, le levier de verrouillage/déverrouillage 8 peut pivoter librement autour de la zone charnière souple A.

Le clip de verrouillage 9 est monobloc avec le levier de verrouillage/déverrouillage 8 et présente la forme d'un prisme allongé à base triangulaire de manière à former un rebord 13. Le clip de verrouillage 9 est en relief par rapport au levier 8 en direction du bac support 2 et est placé sur le levier 8 à une hauteur telle que l'extrémité du clip 9 viendra en appui sur le talon 21b de la batterie pour la verrouiller sur son bac support 2 après sa mise en place. La partie avant inclinée du clip de verrouillage 9 permet de faciliter la mise en place de la batterie sur son support.

Pour obtenir le verrouillage complet de la batterie, il est prévu sur le rebord longitudinal 4b du bac support 2 opposé au levier 8 deux premières butées 14 de forme rectangulaire vues de dessus. Ces butées 14 sont disposées perpendiculairement au rebord 4b et arrivent à fleur de l'extrémité dudit rebord 4b. Elles sont placées à une hauteur telle qu'elles viendront en appui sur le talon 21a de la batterie pour la verrouiller et pour supprimer le déplacement vertical de la batterie après sa mise en place sur son support.

Il est prévu également sur le rebord transversal 5a du bac support 2 adjacent au levier 8 une deuxième butée 15 de forme rectangulaire vue de dessus. Cette butée 15 est disposée perpendiculairement au rebord 5a et arrive à fleur de l'extrémité dudit rebord 5a. Elle est placée à une hauteur telle qu'elle viendra en appui sur le talon de la batterie pour la verrouiller et pour supprimer le déplacement vertical de la batterie après sa mise en place sur son support.

On peut prévoir au-dessus de butées 14 et 15 des éléments de guidage 18 présentant une assise de forme rectangulaire et deux parois latérales 19 de forme triangulaire en appui sur les butées 14 ou 15. Ainsi, le bord de ces parois 19 forme une rampe inclinée pour guider et faciliter la mise en place de la batterie.

Pour supprimer le déplacement transversal ou longitudinal de la batterie, il est prévu des troisièmes butées 16 à l'intérieur du rebord longitudinal 4a et du rebord transversal 5b respectivement. Ces butées 16 présentent la forme d'un trapèze rectangle dont la grande base est solidaire du rebord 4a ou 5b et dont la hauteur est solidaire de l'assise 3 du bac support. Ainsi, ces butées 16 forment également une rampe inclinée pour guider et faciliter la mise en place de la batterie dans son sens longitudinal.

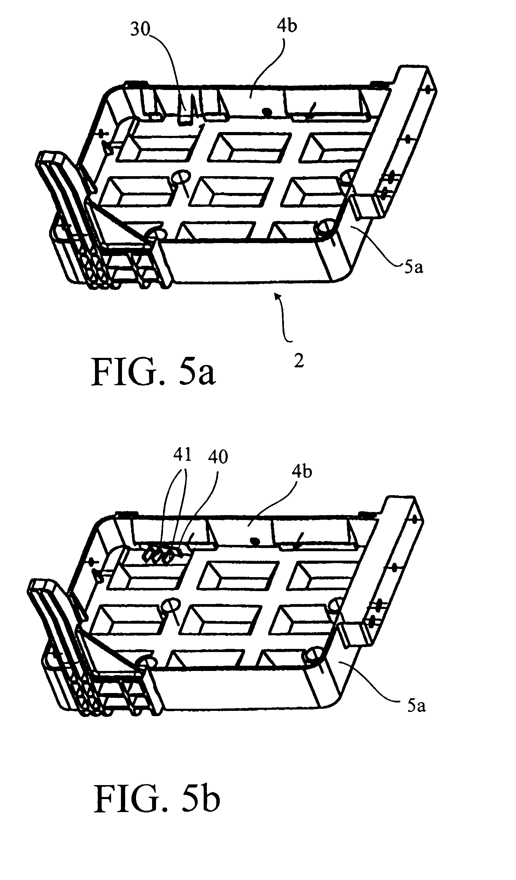

En référence à la figure 5a, la troisième butée agencée pour supprimer le déplacement longitudinal de la batterie 20 comprend une languette souple 30 prévue verticalement sur le rebord 4b et agencée pour s'éclipser lorsque la batterie 20 présente une longueur supérieure à la distance entre le rebord 5a du bac support 2 et ladite languette 30. Dans le cas contraire, la languette 30 vient en appui sur le corps de la batterie 20, la largeur de la languette 30 donnant la résistance à la poussée de la batterie 20. La languette 30 est monobloc avec le bac support 2.

En référence à la figure 5b, il est également possible de prévoir une languette souple 40 disposée horizontalement sur le rebord 4b et agencée pour s'éclipser lors de la mise en place d'une batterie plus longue. Pour s'opposer au fléchissement de la languette 40, par exemple lors de la poussée de la batterie due à une accélération ou un coup de frein brusque, un réseau de nervures 41 est prévu sur la languette 40 de manière à limiter la course et maintenir la rectitude. De même, la languette 40 peut être rigidifiée, hormis la zone charnière, par une nervure prévue longitudinalement.

Il est prévu sur l'assise 3 du bac support 2 quatre butées rétractables 17 constituées d'une languette reliée par un seul côté à l'assise 3 pour former un clip. Ainsi, les butées 17 s'éclipsent dans l'assise 3 lorsque la batterie occupe toute la surface de l'assise 3 du bac support 2 et servent de butées pour supprimer le déplacement longitudinal de la batterie lorsqu'elle est de dimensions inférieures à celle de l'assise 3 du bac 2.

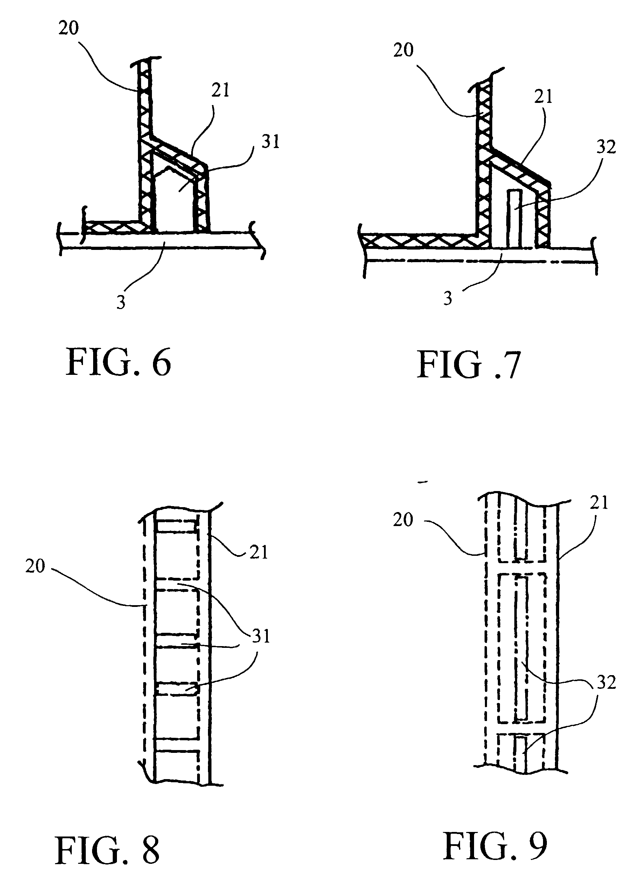

En référence aux figures 6 à 9, il peut être prévu sur l'assise 3 du bac support 2 un réseau de nervures proéminentes transversales 31 ou longitudinales 32 et agencées pour se loger dans l'évidement du talon respectif transversal ou longitudinal 21.

Les nervures transversales 31 présentent une pente pour faciliter l'engagement du talon 21. Elles sont placées l'une derrière l'autre le long des rebords 4a et 4b (cf. Fig. 8), leur nombre étant défini en fonction de la résistance mécanique du talon 21 et du cahier des charges du bac support 2. Ainsi, elles permettent une bonne retenue en de multiples points dans le sens longitudinal.

Les nervures longitudinales 32 sont disposées côte à côte (cf. Fig. 9) le long du rebord 5a par exemple sous le talon avant de la batterie 20. Leur nombre peut varier selon l'effort de retenue demandé. Si besoin, il peut être doublé en réalisant des nervures longitudinales au niveau du talon arrière.

Ces nervures 31 et 32 viennent à la place des languettes souples 30 ou 40 ou des butées rétractables 17.

Enfin, il est prévu une butée inférieure 22 faisant saillie de la face inférieure du bac support 2 et destinée à limiter la course du levier 8 pour éviter d'aller au-delà de sa limite élastique.

La figure 3 représente une batterie 20 pendant l'opération de montage et une fois mise en place sur son bac support 2. Au début du montage, la batterie 20 est inclinée de sorte que son talon 2 la vient se loger sous les premières butées 14, cette introduction étant facilitée par les éléments de guidage 18. Un côté de la batterie repose alors sur la partie inclinée du clip de verrouillage 9. Il suffit ensuite d'appuyer simultanément sur la batterie du côté du clip de verrouillage 9 et sur le levier de verrouillage/déverrouillage 8 vers l'extérieur de manière à écarter le clip de verrouillage 9 sous l'effet de la pression de la batterie et de la poussée du levier 8. Le levier de verrouillage/déverrouillage 8 ayant une certaine souplesse au niveau de la zone charnière souple A, peut se déformer élastiquement.

Le passage est maintenant libéré pour le talon 21b de la batterie qui vient alors se mettre en place sur l'assise 3 du bac support 2. On relâche le levier 8 qui par un effet élastique revient vers sa position initiale, une légère contrainte subsistant pour le serrage de la batterie, de sorte que l'extrémité du clip de verrouillage 9 se positionne au-dessus du talon 21b pour verrouiller la batterie sur son support en engendrant la pression nécessaire. Le clip de verrouillage 9 étant réalisé dans une matière souple, il se déforme élastiquement au niveau de la liaison avec le levier 8, ce qui permet d'utiliser un même bac support 2 pour des batteries ayant des dimensions différentes.

On pousse ensuite la batterie vers la butée 15 pour la positionner correctement sur son support et le cas échéant par rapport aux butées escamotables 17.

Pour démonter la batterie, il suffit d'appuyer à nouveau sur le levier 8 vers l'extérieur pour écarter le clip de verrouillage 9 par déformation élastique du levier et extraire la batterie 20 de son bac support 2. L'extrémité libre de la branche supérieure 8a du levier 8 arrivant au niveau du bord supérieur de la batterie 20, ou le dépassant, est facilement accessible. L'accès est d'autant plus facilité par le fait que la branche supérieure 8a est légèrement biaisée dans sa partie supérieure de manière à s'écarter de la batterie 20 et à faciliter la préhension de son extrémité libre. Le levier 8 est relâché une fois que la batterie 20 est au-dessus du clip de verrouillage 9. On peut alors prendre la batterie à deux mains pour la sortir complètement.

La figure 4 représente un autre exemple de réalisation de l'invention, comprenant dans ce cas deux leviers de verrouillage/déverrouillage 8 et donc deux clips de verrouillage. Ce deuxième levier de verrouillage/déverrouillage peut s'avérer utile pour renforcer le maintien de la batterie sur son support lorsque ladite batterie est d'une longueur importante. Ce deuxième levier remplace dans ce cas la butée 15.

On peut aussi prévoir un levier de verrouillage/déverrouillage et un clip de verrouillage sur un bord transversal du bac support, en remplacement d'une deuxième butée 15.

La présente invention n'est pas limitée aux exemples de réalisation décrits mais s'étend à toute modification et variante évidentes pour un homme du métier.

## Revendications

1. Dispositif de fixation (1) d'une batterie d'accumulateurs (20), notamment pour un véhicule automobile, comprenant un bac support (2) de batterie présentant une assise plane (3) et sur au moins deux bords opposés des rebords longitudinaux (4a, 4b), caractérisé en ce qu'il comprend le long d'au moins un bord dudit bac (2) au moins un levier de verrouillage/déverrouillage (8) formant une seule pièce avec ledit bac (2) et relié audit bac (2) par une zone charnière souple (A), ledit levier de verrouillage/déverrouillage (8) s'étendant au moins sur toute la hauteur de la batterie (20), et un clip de verrouillage (9) solidaire du levier de verrouillage/déverrouillage (8), ledit clip de verrouillage (9) étant agencé pour être, en position de verrouillage, en appui sur le talon (21b) de la batterie (20) afin de bloquer celle-ci en position après sa mise en place dans son bac support (2).

2. Dispositif selon la revendication 1, caractérisé en ce que le levier de verrouillage/déverrouillage (8) s'étend perpendiculairement à l'assise (3) du bac support (2).

3. Dispositif selon la revendication 2, caractérisé en -ce que le levier de verrouillage/déverrouillage (8) comprend une branche supérieure (8a) et une branche inférieure (8b) formant sensiblement un L, en ce que la branche supérieure (8a) s'étend au moins sur toute la hauteur de la batterie (20) et en ce que l'extrémité de la branche inférieure (8b) est reliée à l'assise (3) du bac (2), cette liaison constituant ladite zone charnière souple (A).

4. Dispositif selon la revendication 3, caractérisé en ce que le bac support (2) comprend sur son rebord longitudinal (4a) un dégagement (11) autour de la branche supérieure (8a) du levier de verrouillage/déverrouillage (8) et sur son assise (3) des rainures (8c, 8d) pour recevoir la branche inférieure (8b) dudit levier (8), le levier de verrouillage/déverrouillage (8) pouvant pivoter autour de la zone charnière souple (A).

5. Dispositif selon la revendication 1, caractérisé en ce que le clip de verrouillage (9) est constitué d'une seule pièce avec le levier de verrouillage/déverrouillage (8).

6. Dispositif selon la revendication 5, caractérisé en ce que le clip de verrouillage (9) présente la forme d'un prisme allongé à base triangulaire.

7. Dispositif selon la revendication 1, caractérisé en ce qu'il comprend sur le rebord longitudinal (4b) du bac support (2) opposé au levier de verrouillage/déverrouillage (8) au moins une première butée (14) agencée pour supprimer le déplacement vertical de la batterie (20).

8. Dispositif selon la revendication 1, caractérisé en ce qu'il comprend sur un rebord (5a) du bac support (2) adjacent au levier (8) au moins une deuxième butée (15) agencée pour supprimer le déplacement vertical de la batterie (20).

9. Dispositif selon la revendication 1, caractérisé en ce qu'il comprend à l'intérieur d'au moins un rebord (4a, 4b, 5b) du bac support (2) au moins une troisième butée (16, 30, 40) agencée pour supprimer le déplacement longitudinal ou transversal de la batterie (20).

10. Dispositif selon la revendication 9, caractérisé en ce que la troisième butée agencée pour supprimer le déplacement longitudinal de la batterie (20) comprend une languette souple (30, 40) agencée pour s'éclipser lorsque la batterie (20) présente une longueur supérieure à la distance entre un rebord (5a) du bac support (2) et ladite languette (30, 40).

11. Dispositif selon la revendication 1, caractérisé en ce qu'il comprend sur l'assise (3) du bac support (2) au moins une butée rétractable (17) agencée pour s'éclipser lorsque la batterie (20) occupe toute la surface du bac support (2).

12. Dispositif selon la revendication 1, caractérisé en ce que la surface inférieure du bac support (2) comporte des nervures de rigidification (7).

13. Dispositif selon la revendication 1, caractérisé en ce que la surface inférieure du bac support (2) comporte un réseau d'emboutis.

14. Dispositif selon la revendication 1, caractérisé en ce qu'il comprend sur l'assise (3) du bac support (2) au moins une nervure proéminente transversale (31) ou longitudinale (32) et agencée pour s'engager à l'intérieur du talon (21a, 21b) transversal ou longitudinal respectivement.
